# EUROPEAN PATENT SPECIFICATION

(11) **EP 1 336 537 B1**
(45) Date of publication and mention of the grant of the patent: **10.09.2008**
(21) Application number: 03001243.9
(22) Date of filing: 21.01.2003
(51) Int. Cl.: B60R 21/20, B60R 21/16

(54) **Passenger leg protection apparatus**
Insassenbeine-Schutzvorrichtung
Dispositif de protection des jambes d'un passager

(30) Priority: 18.02.2002 JP 2002040432
(43) Date of publication of application: 20.08.2003
(73) Proprietor: TAKATA CORPORATION, Minato-ku, Tokyo 106-8510 (JP)
(72) Inventor: Abe, Kazuhiro, Minato-ku, Tokyo 106-8510 (JP)
(74) Representative: Banzer, Hans-Jörg

(56) References cited:
- EP-A- 0 957 007
- WO-A-02/04261
- US-B1- 6 176 509
- US-B1- 6 286 866

## Description

### [Technical Field of the Invention]

The present invention relates to a passenger leg protection apparatus, and, more specifically, to an apparatus for protecting legs of a passenger on a high-speed traveling body such as an vehicle by inflating an airbag so-called kneebag or knee-airbag at the position forwardly of the legs in case of collision of the vehicle or the like. Furthermore, the invention relates to a method of manufacturing a passenger leg protection apparatus.

### [Description of the Related Art]

A passenger leg protection apparatus in which an airbag device is installed in the interior member in front of the seat of the motor vehicle about the level that corresponds to the lower legs of the passenger and the airbag is inflated upon collision of the vehicle to receive the legs, especially, the portions under the knees, of the passenger, is already known. This passenger leg protection apparatus includes a folded airbag, a case for accommodating the airbag, a gas generator for inflating the airbag, and a lid member for covering the front face of the case or the like.

### [Problems to be Solved by the Invention]

A method of folding the airbag of the passenger leg protection apparatus is not practically announced. Only a method of folding the airbag for expanding and deploying the airbag sideways quickly is described in Japanese Unexamined Patent Application Publication No.5-208648. However, the passenger leg protection apparatus in this publication is of a type in which the position of installation is shifted leftward or rightward from the front of the legs of the passenger.

From WO 02/04261 A1, a passenger leg protection apparatus is known, which comprises an airbag to be inflated at a position in front of the legs of a passenger for protecting the legs, a case accommodating the folded airbag, and a gas generating unit for inflating the airbag. The airbag has a folded body including a main wound body formed by folding the airbag along lateral folding lines extending laterally of the passenger a plurality of times in the same folding direction so that the folded body is deployed upwards while rolling when the airbag is inflated.

Furthermore, EP 1 452 407 A1, which constitutes state of the art only under Art. 54(3) and (4) EPC, discloses a passenger leg protection apparatus comprising an airbag to be inflated in front of legs of a passenger for protecting the legs, a case accommodating the folded airbag, and a gas generating unit for inflating the airbag. The airbag of this document has a folded body including a main wound body formed by folding the airbag along lateral folding lines extending laterally of the passenger a plurality of times in the same folding direction so that the folded body is deployed upward while rolling when the airbag is inflated, whereby the folded body of the airbag further comprises side wound bodies formed by folding the main wound body along vertical folding lines extending vertically of the passenger.

It is an object of the present invention to provide a passenger leg protection apparatus to be disposed in front of the legs of the passenger in which the airbag is deployed smoothly upward or downward along the legs of the passenger, and a method of manufacturing such a passenger leg protection apparatus.

### [Means for Solving the Problems]

According to the present invention, this object is achieved by a passenger leg protection apparatus as defined in claim 1 and a method as defined in claim 2.

The passenger leg protection apparatus according to the present invention includes an airbag to be inflated at the position in front of the legs of the passenger for protecting the legs, a case accommodating the folded airbag, and a gas generating unit for inflating the airbag, wherein the folded body of the airbag includes a wound body formed by pushing an upper end of the airbag into the airbag and then folding the airbag along the lateral folding lines extending laterally of the passenger a plurality of times in the same folding direction, and the airbag is disposed in the case so that the wound body is deployed upward or downward while rolling along the front surface of the legs so as to be unwound when being inflated.

In the passenger leg protection apparatus of the present invention, the gas generating unit is actuated in case of emergency such as collision of the vehicle or the like to inflate the airbag to receive the legs of the passenger.

The folded body of the airbag includes a wound body formed by being folded and wound along the lateral folding lines a plurality of times in the direction toward or away from the passenger. When the airbag is inflated, the wound body is deployed while being rotated upward or downward along the front surface of the legs of the passenger. Therefore, the airbag is capable of being inflated smoothly upward or downward being rarely blocked by the front surface of the legs of the passenger.

According to the present invention, after the aforementioned wound body is formed, the airbag is folded along the lateral folding lines extending laterally of the passenger a plurality of times in the direction toward or away from the passenger, and then folded along the vertical folding lines extending vertically of the passenger. In this mode, after coming out of the case, the airbag is deployed in the lateral direction and placed in front of the left leg and the right leg of the passenger, and subsequently is inflated while being rotated upward or downward. This mode is especially preferable when a space available in front of the passenger is relatively large.

### [Brief Description of the Drawings]

Fig. 1 shows a procedure of folding an airbag.

Fig. 2 shows a further procedure of folding an airbag.

Fig. 3 shows another procedure of folding an airbag.

Fig. 4 shows a further procedure of folding an airbag.

Fig. 5 shows another procedure of folding an airbag.

Fig. 6 shows a further procedure of folding an airbag.

Fig. 7 shows another procedure of folding an airbag.

Fig. 8 shows a further procedure of folding an airbag.

Fig. 9 shows another procedure of folding an airbag.

Fig. 10 shows a further procedure of folding an airbag.

Fig. 11 shows another procedure of folding an airbag.

Fig. 12 shows a further procedure of folding an airbag.

Fig. 13 shows another procedure of folding an airbag.

Fig. 14 shows a further procedure of folding an airbag.

Fig. 15 shows another procedure of folding an airbag.

Fig. 16 shows a further procedure of folding an airbag.

Fig. 17 shows another procedure of folding an airbag.

Fig. 18 shows a procedure of folding an airbag according to an embodiment of the invention.

Fig. 19 shows an explanatory drawing showing a state of inflation of an airbag according to still another embodiment of the invention.

### [Description of Embodiments]

Referring now to the drawings, embodiments of the present invention will be described.

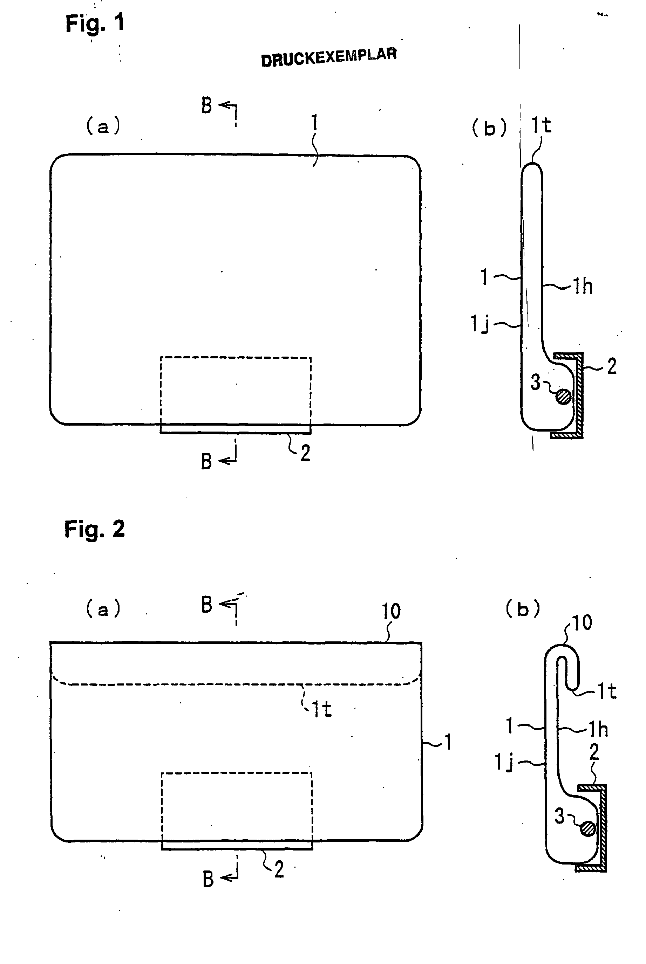

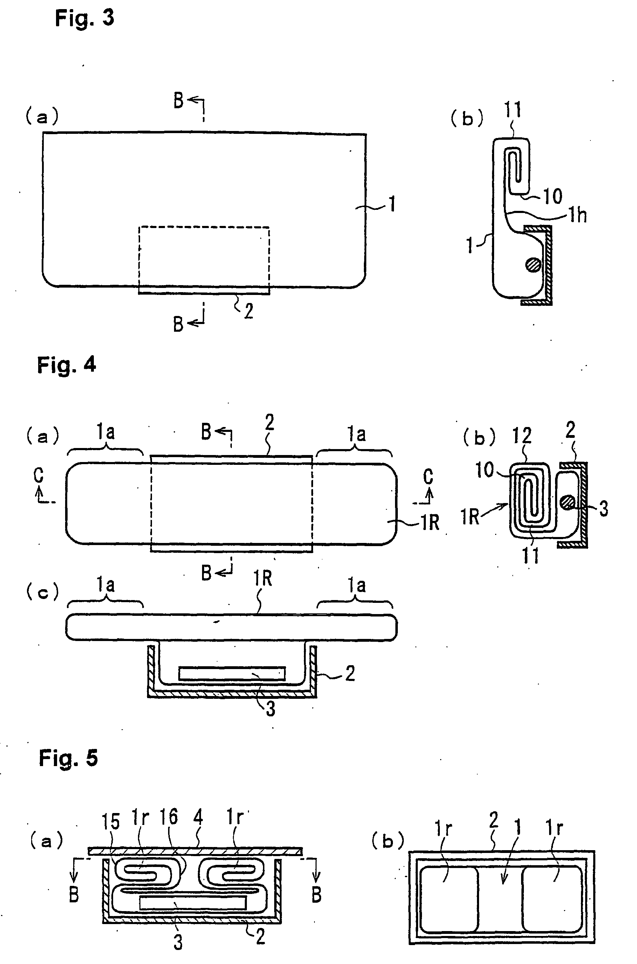

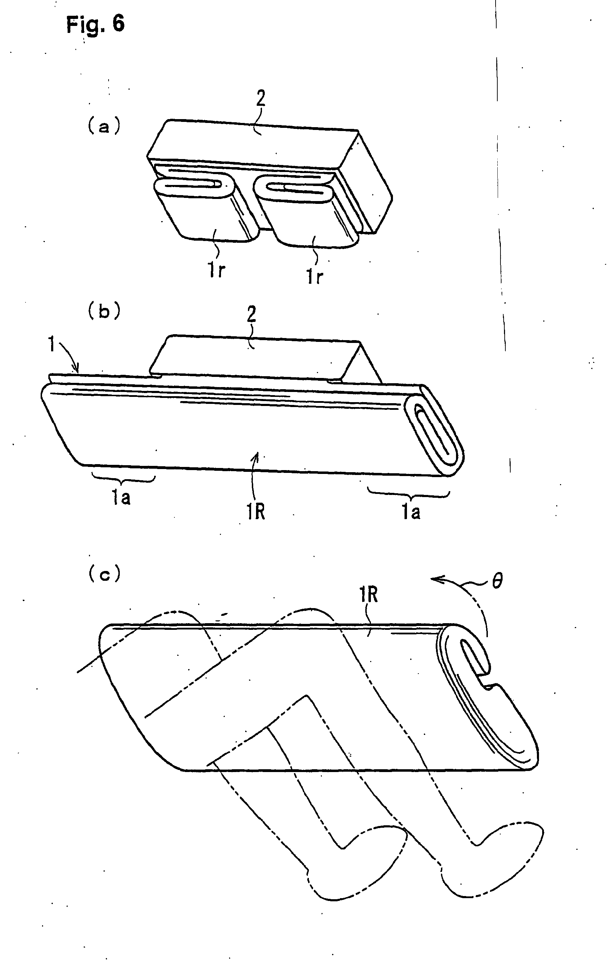

Fig. 1 to Fig. 5 are explanatory drawings illustrating an airbag folding procedure for a passenger leg protection apparatus, in which the figures marked as (b) in the respective figures are cross sections taken along the line B-B in the figures marked as (a) in the respective figures, Fig. 4(c) is a cross section taken along the line C-C in Fig. 4(a). Figs. 6(a), (b) and (c) are explanatory drawings illustrating steps of inflation of this airbag.

This passenger leg protection apparatus includes an airbag (knee-airbag) 1, a case 2 accommodating the folded airbag 1, an inflator 3, which corresponds to a gas generator, for inflating the airbag 1, and a lid 4 (See Fig. 5) for covering the front opening of the case 2. The inflator 3 is disposed in the airbag 1. A stud bolt (not shown) is projected from the inflator 3 or a holder (not shown) holding the inflator 3, and the stud bolt passes through the airbag 1 and the rear surface of the case 2, and a nut (not shown) is tightened thereon. Such tightening of the nut fixes the inflator 3 to the case 2, and the rear end of the airbag 1 is clamped between the inflator 3 or the holder thereof and the rear surface of the case 2.

The folding procedure of the airbag 1 is as follows. The airbag 1 is placed on a flat and horizontal working table together with the case 2, spread flatly, and then folded. However, the airbag 1 is shown in a state of being spread along the vertical plane in Fig. 1 to Fig. 3, in order to make description based on the state in which the passenger leg protection apparatus is mounted on a vehicle. In Figs. 1 to 3, Figs. 4(a) and (b), Fig. 5(b) and Fig. 6, the vertical directions in the respective figures corresponds substantially to the vertical direction of the passenger leg protecting apparatus being mounted on the vehicle.

The airbag 1 is pulled out from the case 2 as shown in Fig. 1, and spread flatly. In this example, the airbag 1 is spread upwardly of the case 2. Subsequently, as shown in Fig. 2, the airbag 1 is folded along a lateral folding line 10 at the position of the airbag a predetermined width (for example, 20 to 150 mm) away from the upper edge 1t in the direction from the passenger side 1j to the opposite side ih from the passenger.

Subsequently, as shown in Fig. 3, the airbag 1 is folded along a lateral folding line 11 at the position almost the same width below the aforementioned folding line 10 from the passenger side 1j to the opposite side 1h from the passenger. Then, as shown in Fig. 4, the airbag 1 is folded again along a lateral folding line 12 at the position almost the same width below the aforementioned folding line 12 from the passenger side 1j to the opposite side 1h from the passenger. The folding direction along the folding lines 11, 12 and 13 are the same direction, whereby, a wound body (main wound body) 1R is formed as shown in Fig. 4(b). The wound body 1R is wound clockwise toward the edge 1t as shown in vertical cross section taken along plane extending in the fore-and-aft direction of the vehicle in a state in which the passenger is placed on the left side in the figure.

The wound body 1R includes overhanging portions 1a overhanging leftward and rightward from the case 2, as shown in Fig. 4(a) and (c). Accordingly, these overhanging portions 1a are folded along vertical folding lines 15, 16 (See Fig. 5(a)) toward the inside of the case 2 from the passenger side 1j to the side 1h opposite from the passenger to form wound bodies (side wound bodies) 1r, and then stored in the case 2. Subsequently, the lid 4 is attached to complete the passenger leg protection apparatus.

The passenger leg protection apparatus is installed, for example, in the interior panel in front of the seat, and the lid 4 is disposed to be flush with the interior panel.

When the inflator 3 is actuated and the airbag 1 of the passenger leg protection apparatus is inflated upon collision of the vehicle, the lid 4 is opened by being pressed by the airbag 1, and the side wound bodies 1r of the airbag 1 projects from the case 2 toward the front as shown in Fig. 6(a). Subsequently, the side wound bodies 1r are deployed leftward and rightward of the legs of the passenger, as shown in Fig. 6(b), and then the main wound body 1R of the airbag 1 is deployed upward in front of the legs of the passenger. The main wound body 1R wound in the clockwise direction rotates in the counterclockwise direction θ as shown in Fig. 6(c), and is deployed upward. In this case, since the wound bodies 1r and 1R are unwound so as to be rolled along the front surface of the legs, the airbag 1 is rarely blocked by the front surface of the legs upon inflation. Therefore, the airbag 1 deploys quite smoothly.

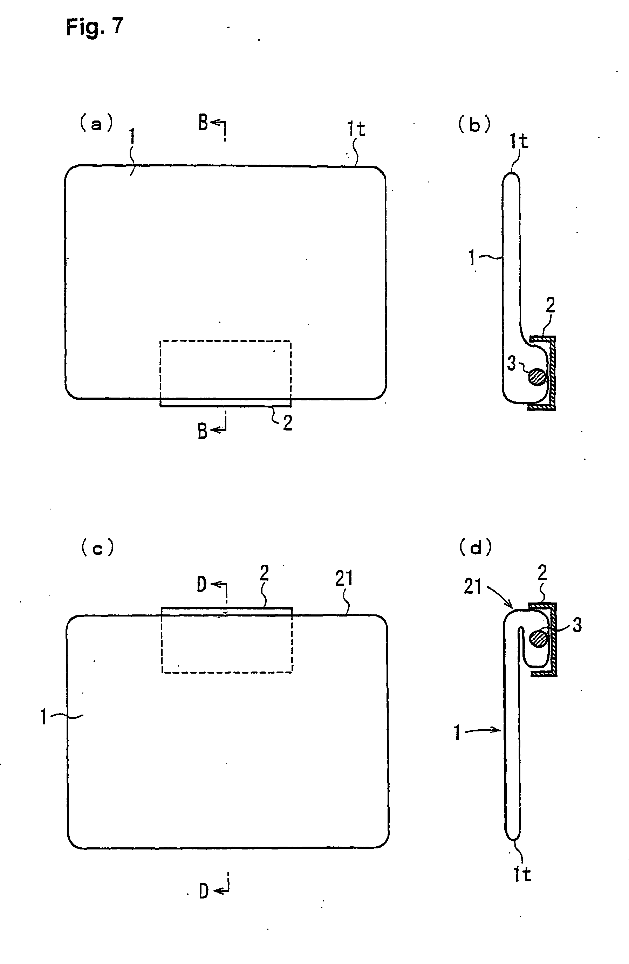

Referring now to Fig. 7 to Fig. 10, another folding procedure will be described. The figures marked as (b) in Fig. 7 to Fig. 9 are cross sections taken along the line B-B in the figures marked as (a) in the respective figures.

Figs. 7(a) and (b) show states in which the airbag is flatly spread as in Figs. 1(a) and (b) before being folded. The airbag 1 is spread upward of the case 2.

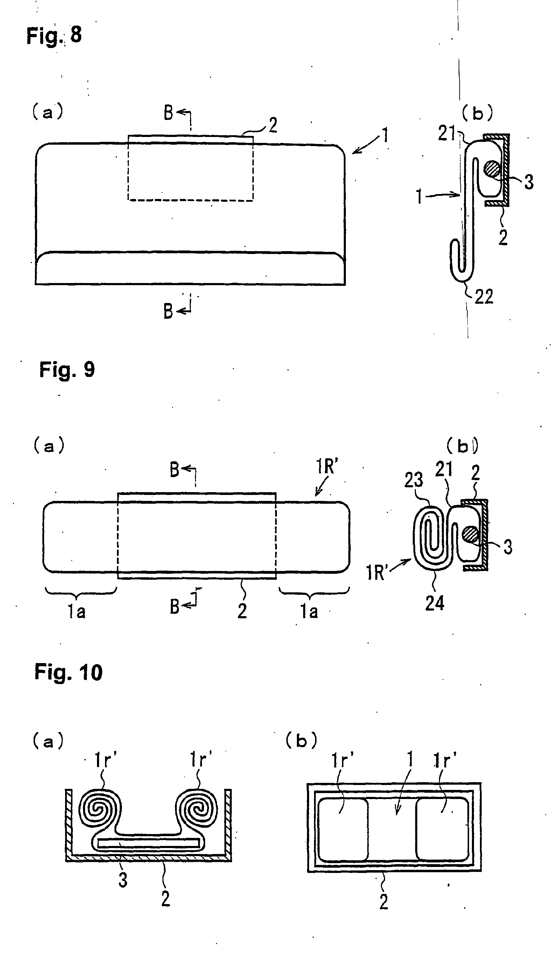

From this state, as shown in Figs. 7(c) and (d) (Fig. 7(d) is a cross section taken along the line D-D in Fig. 7(c)), the airbag 1 is folded downwardly of the case 2 as a whole along a lateral folding line 21. Subsequently, as shown in Figs. 8(a) and (b) and Fig. 9(a) and (b), the airbag 1 is folded along lateral folding lines 22, 23, 24 in sequence to form a main wound body 1R'. The wound body 1R' is also wound in the clockwise direction toward the edge 1t as shown in a vertical cross sectional view shown in Fig. 9(b).

Subsequently, side wound bodies 1r' as shown in Figs. 10(a) and (b) are formed by folding or winding the left and right overhanging portions 1a overhanging from the case 2 along the vertical folding lines in the same direction, then the wound bodies 1r' and 1R' are stored inside the case 2, and the lid 4 (not shown in Fig. 10(a)) is attached to complete the passenger leg protection apparatus.

The sequence of inflation of the airbag 1 of the passenger leg protection apparatus is the same as that shown in Fig. 6. In other words, in this case as well, the airbag 1 comes out from the case 2 toward the front, deployed leftward and rightward quickly as if it rolls while being rarely blocked by the legs of the passenger and then deployed upward smoothly.

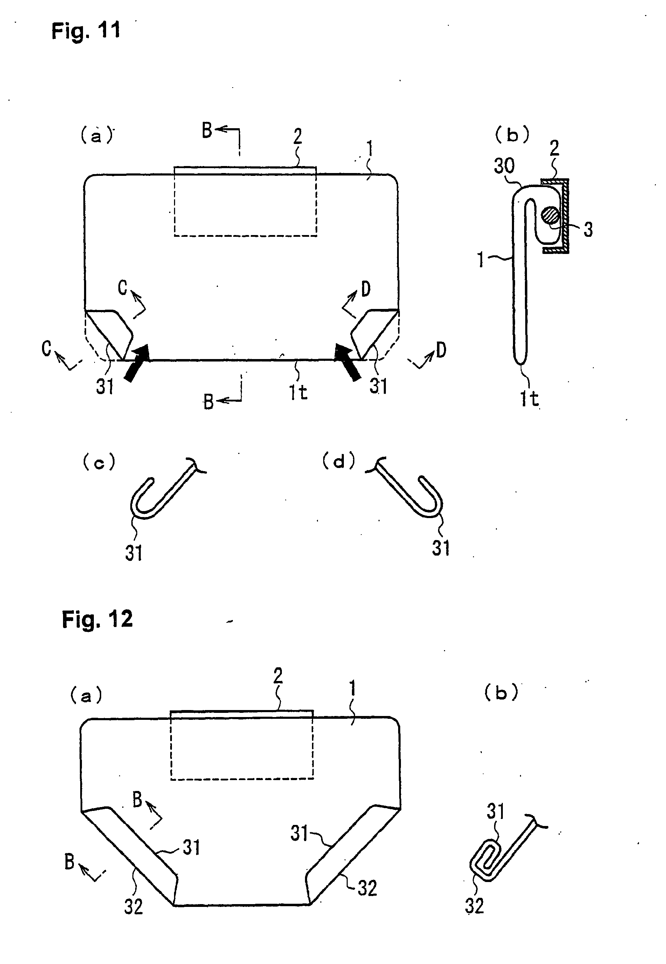

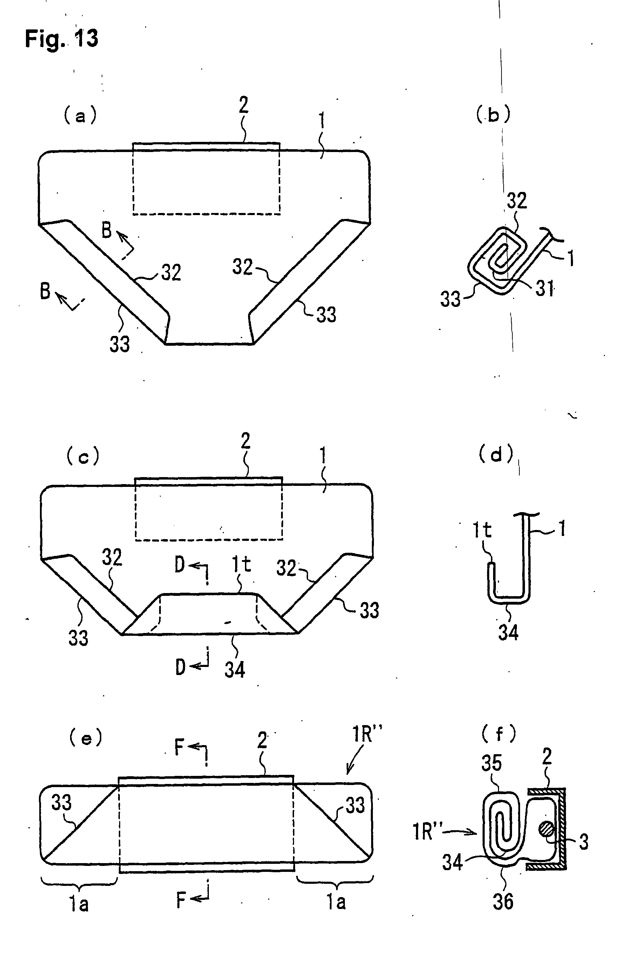

Referring now to Fig. 11 to Fig. 13, still another folding procedure will be described. Figs. 11(b), (c) and (d) are cross sectional view taken along the lines B-B, C-C and D-D in Fig. 11(a), Fig. 12(b) is a cross sectional view taken along the line B-B in Fig. 12(a), and Figs. 13(b), (d) and (f) are cross sectional views taken along the lines B-B, D-D and F-F in Figs. 13(a), (c) and (e).

In a first place, the airbag 1 is folded along a lateral folding line 30 so that the airbag 1 is placed downwardly of the case 2 as a whole as shown in Figs. 11(a) and (b). The state before folding along folding lines 31 that will be described later is the same as Figs. 7(c) and (d).

Form the state shown in Fig. 7(c) and (d), the airbag 1 is folded along the oblique folding lines 31 at the corners near both ends of the edge 1t of the airbag toward the passenger. The folding lines 31 intersect both of the edge 1t and side edges of the airbag, which meet at the corners thereof.

As shown in Figs. 12(a) and (b) and Figs. 13(a) and (b), the airbag 1 is further folded along the second folding lines 32 and 33 in parallel with the folding lines 31 twice toward the passenger.

Subsequently, as shown in Figs. 13(c) and (d), the lower portion of the airbag 1 is folded along a lateral folding line 34 so that the edge 1t is placed on the passenger side. Then, as shown in Figs. 13(e) and (f), the airbag 1 is folded along lateral folding lines 35 and 36 to form a main wound body 1R". The wound body 1R" is wound clockwise toward the edge 1t as shown in Fig. 13(f).

As shown in Fig. 13(e), the wound body 1R" has left and right overhanging portions 1a, though it is not shown, these overhanging portions 1a are wound as in Fig. 5 to form the side wound bodies, and then stored in the case 2. Subsequently, the lid is attached to complete the passenger leg protection apparatus.

According to the passenger leg protection apparatus, the same effects as in the aforesaid passenger leg protection apparatus are achieved. In the example shown in Fig. 11 to Fig. 13, since there are portions folded along the oblique folding lines 31, 32 and 33, the inflation of the left and right corner portions of the airbag 1 is delayed, and as a consequence, deployment of the airbag 1 in the lateral direction and upward direction is achieved sooner correspondingly.

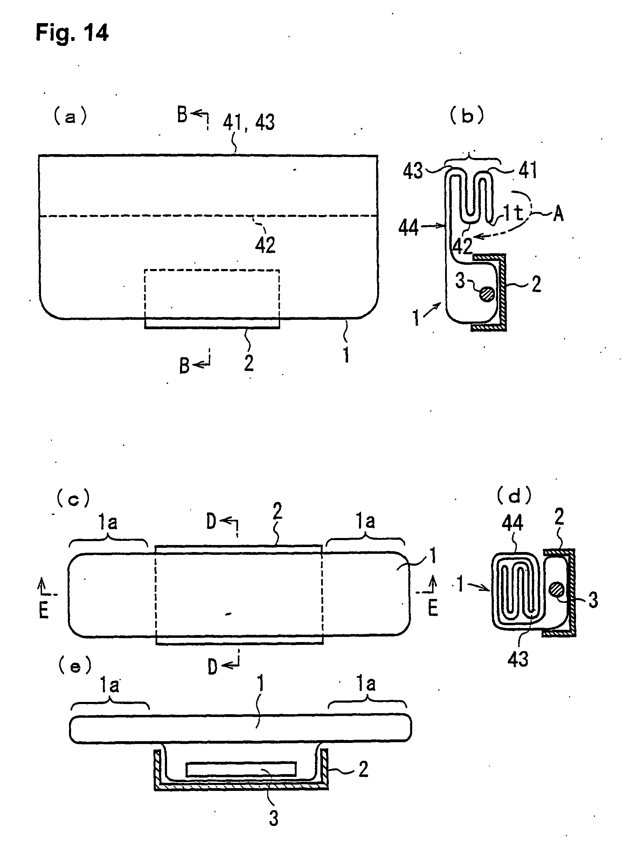

Referring now to Fig. 14, further another airbag folding procedure will be described. Fig. 14(b) is a cross section taken along the line B-B in Fig. 14(a), and Figs. 14 (d), (e) are cross sections taken along the line D-D, E-E in Fig. 14(c).

In the procedure shown in Fig. 14, the airbag 1 is set to the initial state shown in Figs. 1(a) and (b), and then the upper portion of the airbag 1 is folded along a lateral folding lines 41, 42 and 43 into concertinas. Subsequently, as shown by an arrow A, the portions of concertinas are folded along a lateral folding line 44 so as to roll up inwardly. As shown in Fig. 14(d), a main wound body rolled counterclockwise from the lateral folding line 43 to the lateral folding line 44 is formed. The left and right overhanging portions 1a of this wound body are wound to form side wound bodies, and stored inside the case 2. Subsequently, the lid is attached to complete the passenger leg protection apparatus.

This type of passenger leg protection apparatus has the same effects as the preceding examples. Especially, in this type of passenger leg protection apparatus, in the last stage of inflation is nearly finished, the portion of concertinas is inflated so as to extend upward. Since the area that the portion of concertinas extends is located upwardly of the patella, it is not brought into friction with legs of the passenger.

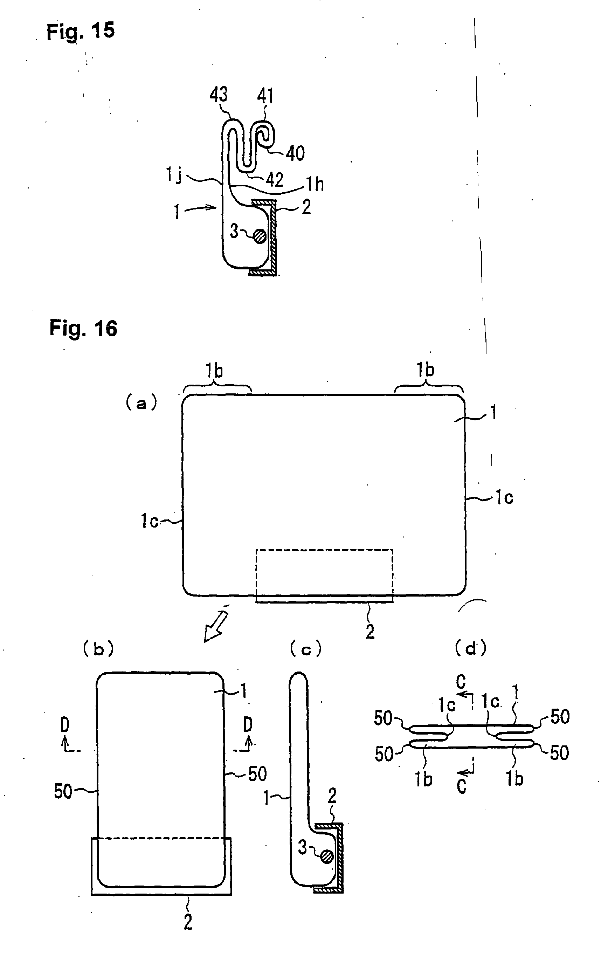

As shown in Fig. 15, the portion near the edge 1t of the portion of concertinas shown in Fig. 14(b) may further be folded along the lateral folding line 40.

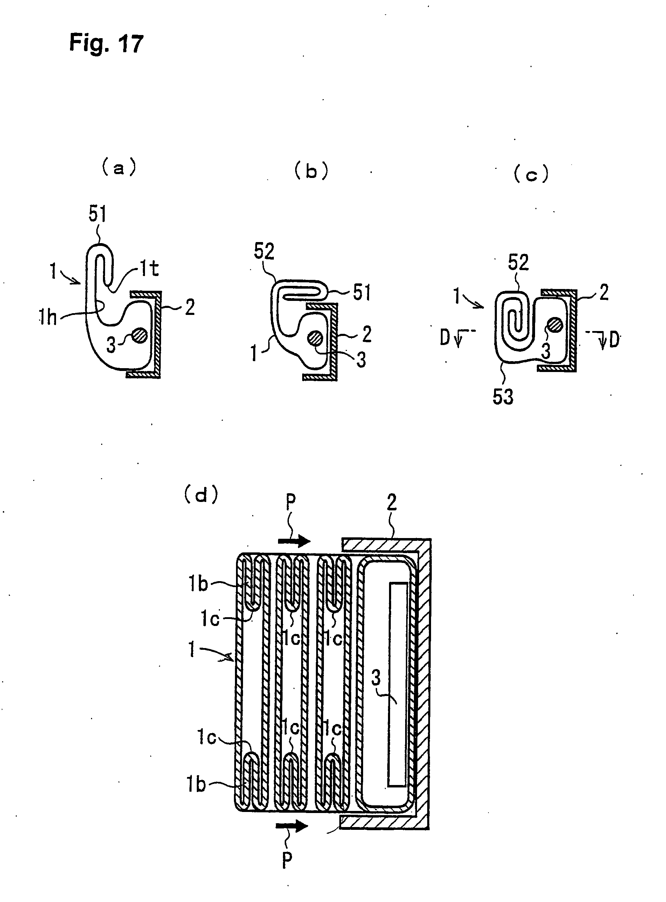

Referring now to Fig. 16 and Fig. 17, a further different example will be described. Figs. 16(c) and (d) are cross sections taken along the line C-C and D-D in Fig. 16(b).

In this example, the airbag 1 is folded from the initial state (the same as Fig. 1(a) described above) of Fig. 16(a) in such a manner that both side portions 1b along both sides 1c of the airbag 1 is pushed into the airbag 1 along vertical folding lines 50 a shown in Figs. 16(b), (c) and (d). Subsequently, wounded bodies are formed by folding along the lateral folding lines 51, 52 and 53 according to the procedure shown in Figs. 2, 3 and 4 as shown in Figs. 17(a), (b) and (c). Then, as shown in Fig. 17(d), the folded body is stored into the case 2 as shown by an arrow P, and a lid is attached thereon to complete the passenger leg protection apparatus.

When the passenger leg protection apparatus of this example is inflated, the airbag 1 comes out from the case 2 once, and then the wound body is inflated as it rolls upward along the legs of the passenger. Subsequently, side portions 1c are inflated laterally to the end. In this manner, since the airbag 1 is inflated upward in an early state, this embodiment is preferable for a small vehicle in which only a small space is available around the patella of the passenger.

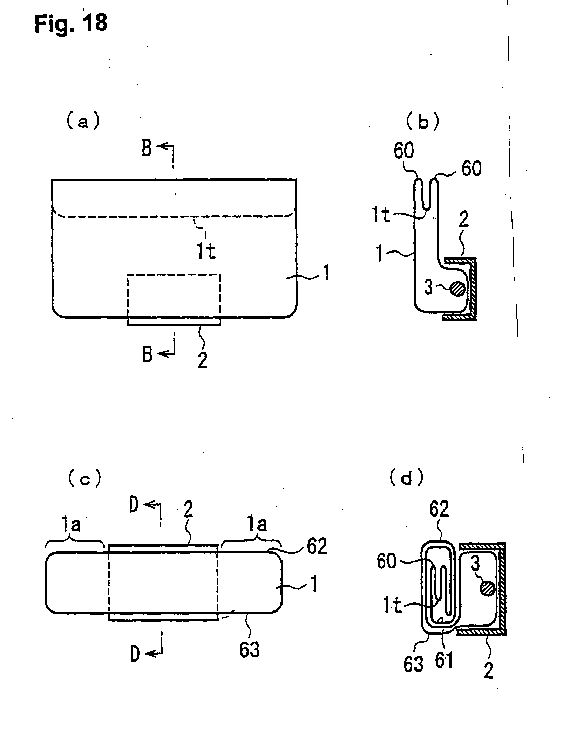

As shown in Figs. 18(a) and (b), the airbag 1 may also be folded from the initial state shown in Fig. 1 in such a manner that the upper edge 1t is pushed into the airbag 1 along a lateral folding line 60, and then folded according to any one of the folding procedures described above. In Figs. 18(c) and (d), after the procedure shown in Figs. 18(a) and (b), the airbag 1 is folded along lateral folding lines 61, 62 and 63 to form a main wound body according to the procedure shown in Fig. 2 to Fig. 4, and then is folded along the lateral folding lines 61, 62 and 63 to form a main wound body. Subsequently, the overhanging portions 1a are wound to form the side wound bodies, stored inside the case 2 to complete the passenger leg protection apparatus.

Fig. 18(b) is a cross section taken along the line B-B in Fig. 18(a), and Fig. 18(d) is a cross section taken along the line D-D in Fig. 18(c).

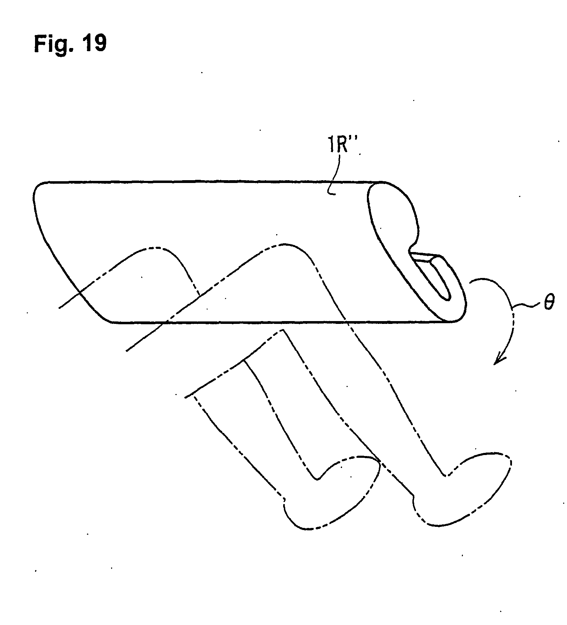

In the present embodiment, the main wound body is inflated as if it rolls upward from the bottom, but it may be folded so that the airbag is inflated as if it rolls downward from the top along the front surface of the legs of the passenger according to the present invention as shown in Fig. 19. In this case, the airbag is to be folded in vertical mirror opposite from the preceding embodiments.

### [Advantages]

As described thus far, the passenger leg protection apparatus of the invention is inflated smoothly being rarely blocked by the legs of the passenger.

## Claims

1. A passenger leg protection apparatus, comprising:
an airbag (1) to be inflated at a position in front of legs of a passenger for protecting the legs;
a case (2) accommodating the folded airbag (1); and
a gas generating unit (3) for inflating the airbag (1),
wherein the airbag (1) has a folded body including a main wound body (1R) formed by pushing an upper edge (1t) of the airbag into the airbag and then folding the airbag (1), along lateral folding lines (10-12) extending laterally of the passenger a plurality of times in the same folding direction so that the folded body is deployed upward or downward while rolling when the airbag (1) is inflated,
wherein the folded body of the airbag (1) further comprises side wound bodies (1r) formed by folding the main wound body (1R) along vertical folding lines (15, 16) extending vertically of the passenger.

2. A method of manufacturing a passenger leg protection apparatus, comprising the steps:
forming a folded body of an airbag (1) to be inflated at a position in front of legs of a passenger for protecting the legs by pushing an upper edge (1t) of the airbag into the airbag and then folding the airbag (1) along lateral folding lines (10-12) extending laterally of the passenger a plurality of times in the same folding direction to form a main wound body (1R) so that the folded body is deployed upward or downward while rolling when the airbag (1) is inflated, and by folding the main wound body (1R) along vertical folding lines (15, 16) extending vertically of the passenger to form side wound bodies (1r); and
accommodating the folded body of the airbag (1) comprising the main wound body (1R) and the side wound bodies (1r) in a case (2).

## Patentansprüche

1. Schutzvorrichtung für die Beine eines Insassen, umfassend:
einen Airbag (1), welcher an einer Stelle vor den Beinen eines Insassen aufzublasen ist, um die Beine zu schützen;
ein Gehäuse (2), in welchem der gefaltete Airbag (1) untergebracht ist; und
eine Gaserzeugungseinheit (3) zum Aufblasen des Airbags (1),
wobei der Airbag (1) einen gefalteten Körper mit einem gewickelten Hauptkörper (1R) aufweist, welcher durch Hineindrücken einer Oberkante (1t) des Airbags in den Airbag und anschließendes Falten des Airbags (1) entlang lateraler Faltlinien (10-12), welche sich lateral zu dem Insassen erstrecken, mehrmals in dieselbe Faltrichtung gebildet ist, so dass sich der gefaltete Körper beim Aufblasen des Airbags (1) nach oben oder nach unten durch Abrollen entfaltet,
wobei der gefaltete Körper des Airbags (1) des Weiteren gewickelte Seitenkörper (1r) umfasst, welche durch Falten des gewickelten Hauptkörpers (1R) entlang vertikaler Faltlinien (15, 16), die sich vertikal zu dem Insassen erstrecken, gebildet sind.

2. Verfahren zum Herstellen einer Schutzvorrichtung für die Beine eines Insassen, umfassend die Schritte:
Bilden eines gefalteten Köpers eines Airbags (1), welcher an einer Stelle vor den Beinen eines Insassen zum Schutz der Beine aufzublasen ist, durch Hineindrücken einer Oberkante (1t) des Airbags in den Airbag und anschließendes Falten des Airbags (1) entlang lateraler Faltlinien (10-12), welche sich lateral zu dem Insassen erstrecken, mehrmals in dieselbe Faltrichtung, um einen gewickelten Hauptkörper (1R) zu bilden, so dass der gefaltete Körper beim Aufblasen des Airbags (1) nach oben oder nach unten durch Abrollen entfaltet wird, und durch Falten des gewickelten Hauptkörpers (1R) entlang vertikaler Faltlinien (15, 16), welche sich vertikal zu dem Insassen erstrecken, um gewickelte Seitenkörper (1r) zu bilden; und
Unterbringen des gefalteten Körpers des Airbags (1) mit dem gewickelten Hauptkörper (1R) und den gewickelten Seitenkörpern (1r) in einem Gehäuse (2).

## Revendications

1. Un dispositif de protection de jambe de passager, comprenant :
un coussin de sécurité gonflable (1) destiné à être gonflé dans une position en face de jambes d'un passager pour protéger les jambes ;
un boîtier (2) logeant le coussin de sécurité gonflable (1) plié ; et
une unité (3) générant du gaz pour gonfler le coussin de sécurité gonflable
dans lequel le coussin de sécurité gonflable (1) a un corps plié incluant un corps principal enroulé (1R) formé en poussant un bord supérieur (1t) du coussin de sécurité gonflable vers le coussin de sécurité gonflable et ensuite en pliant le coussin de sécurité gonflable (1) le long de lignes de pliage latérales (10-12) s'étendant latéralement par rapport au passager une pluralité de fois dans la même direction de pliage de sorte que le corps plié se déploie vers le haut ou vers le bas tout en roulant quand le coussin de sécurité gonflable (1) est gonflé,
dans lequel le corps plié du coussin de sécurité gonflable (1) comprend en outre des corps enroulés latéraux (1r) formés en pliant le corps principal enroulé (1R) le long de lignes de pliage verticales (15, 16) s'étendant à la verticale du passager.

2. Un procédé de fabrication d'un dispositif de protection de jambe de passager, comprenant les étapes consistant à :
former un corps plié d'un coussin de sécurité gonflable (1) destiné à être gonflé dans une position en face de jambes d'un passager pour protéger les jambes en poussant un bord supérieur (1t) du coussin de sécurité gonflable vers le coussin de sécurité gonflable et ensuite en pliant le coussin de sécurité gonflable (1) le long de lignes de pliage latérales (10-12) s'étendant latéralement par rapport au passager une pluralité de fois dans la même direction de pliage pour former un corps enroulé principal (1R) de sorte que le corps plié se déploie vers le haut ou vers le bas tout en roulant quand le coussin de sécurité gonflable (1) est gonflé, et en pliant le corps enroulé principal (1R) le long de lignes de pliage verticales (15, 16) s'étendant à la verticale du passager pour former des corps enroulés latéraux (1r) ; et
loger le corps plié du coussin de sécurité gonflable (1) comprenant le corps enroulé principal (1R) et les corps enroulés latéraux (1r) dans un boîtier (2).
